# DEMANDE DE BREVET EUROPEEN

(11) **EP 4 711 582 A1**
(43) Date de publication de la demande: **18.03.2026**
(21) Numéro de dépôt: 25201182.0
(22) Date de dépôt: 09.09.2025
(51) Int. Cl.: F01D 5/02, F02C 7/36, F16D 1/108, F01D 25/16, F16D 1/10

(54) **ARBRE DE TRANSMISSION POUR UNE TURBOMACHINE D' AERONEF**

(30) Priorité: 12.09.2024 FR 2409729
(71) Demandeur: Safran Transmission Systems, 92700 Colombes (FR)
(72) Inventeur: CADET,, Clément Romain Aimé, 77550 MOISSY-CRAMAYEL (FR); YE,, William, 77550 MOISSY-CRAMAYEL (FR); PEREA,, Victor, 77550 MOISSY-CRAMAYEL (FR); BOUDHANI,, Mohamed, 77550 MOISSY-CRAMAYEL (FR)
(74) Mandataire: Gevers & Orès

(57) **Abrégé**

L'invention concerne un arbre de transmission (22) comprenant :
- un corps cylindrique mâle (23),
- un premier tronçon cannelée agencé coaxialement autour du corps cylindrique mâle (23) et présentant des première cannelures (38) longitudinales et comprenant une alternance de première dents (39) et de première gorges (40), le premier tronçon (34) étant solidaire en rotation du corps cylindrique mâle (23),
caractérisé en ce que l'arbre de transmission (22) comprend en outre :
- un second tronçon cannelé agencé coaxialement autour du corps cylindrique mâle (23), le second tronçon présentant des seconde cannelures longitudinales et comprenant une alternance de seconde dents (44) et de seconde gorges, le second tronçon étant sollicité par un élément élastique d'une première position à une seconde position dans laquelle les secondes dents (44) sont décalées angulairement vis-à-vis des premières dents (39).

## Description

### Domaine technique de l'invention

L'invention concerne un arbre de transmission pour une turbomachine d'aéronef.

L'invention concerne en particulier un arbre de transmission présentant des cannelures.

### Arrière-plan technique

Une turbomachine d'aéronef s'étend généralement le long et autour d'un axe longitudinal. Elle comprend un générateur de gaz qui comporte typiquement d'amont en aval, dans le sens d'écoulement des gaz dans la turbomachine, une soufflante, un compresseur basse pression, un compresseur haute pression, une chambre de combustion des gaz, une turbine haute pression et une turbine basse pression.

Le rotor du compresseur basse pression est typiquement relié au rotor de la turbine basse pression par l'intermédiaire d'un arbre basse pression. Le rotor du compresseur haute pression est quant à lui relié au rotor de la turbine haute pression par un arbre haute pression.

La soufflante permet assure l'aspiration d'un flux d'air qui se divise en un flux d'air primaire traversant une veine primaire et en un flux d'air secondaire traversant une veine secondaire entourant la veine primaire. Le flux d'air primaire traverse les compresseurs basse pression et haute pression. Le flux d'air primaire comprimé traverse ensuite la chambre de combustion dans laquelle il est mélangé à un carburant. Les gaz issus de la combustion traversent ainsi les turbines haute pression et basse pression. L'énergie des gaz est transformée par le rotor de turbine de la turbine basse pression en énergie mécanique permettant d'entrainer en rotation l'arbre basse pression et par suite, le compresseur basse pression.

Par ailleurs, une telle turbomachine comprend une pluralité d'accessoires telles que des pompes de lubrification, des pompes à carburant, ou des organes d'alimentation électriques nécessaires au fonctionnement de la turbomachine et de l'aéronef. Ces accessoires doivent être également alimentés en énergie pour leur fonctionnement.

Dans ce cadre, une partie l'énergie mécanique de la turbomachine est prélevée pour alimenter les accessoires. Le prélèvement est typiquement réalisé sur l'un des arbres de la turbomachine, en particulier l'arbre haute pression. Un tel prélèvement s'effectue par un train d'entrainement des accessoires, également connu sous l'acronyme anglais ADT pour « Accessory Drive Train ». Un tel train d'entrainement est également mis en œuvre pour l'entrainement mécanique de la turbomachine lors des phases de démarrage.

Le train d'entrainement d'accessoires comprend typiquement des arbres de transmission qui assurent la transmission du mouvement de rotation des arbres de la turbomachine et le transfert d'énergie mécanique.

Chaque arbre de transmission s'étend selon un axe longitudinal et comprend typiquement un corps cylindrique mâle s'étendant le long de l'axe longitudinal et un corps cylindrique femelle dans lequel le corps cylindrique mâle est engagé de manière coaxiale.

Les corps cylindriques mâle et femelle coopèrent ensemble selon une liaison à cannelures. Ainsi, le corps cylindrique mâle comprend un tronçon à cannelures longitudinales et le corps cylindrique femelle comprend un logement interne annulaire présentant des cannelures internes longitudinales qui coopèrent avec les cannelures de corps cylindrique mâle. Dans certaines turbomachines hybridées, le train d'entrainement des accessoires est également mis en œuvre pour des phases d'injection d'énergie. Dans de telle turbomachines, le train d'entrainement des accessoires connait ainsi une alternance de phases d'injection et de prélèvement d'énergie. Or, cette alternance de phases de prélèvement et d'injection génère des sur couples dynamiques au sein des arbres de transmission du train d'entrainement des accessoires, entrainant des jeux mécaniques plus importants entre les cannelures des corps cylindriques mâle et femelle. Ces jeux sont responsables de forts cliquetis pendant la rotation des arbres de transmission. Aussi, cette alternance de phases de prélèvement et d'injection de puissance génère des oscillations de couples au sein des arbres de transmission.

Ces phénomènes particulièrement importants dans les turbomachines hybridées peuvent dégrader sévèrement les arbres de transmission.

A cet effet, il existe un besoin de fournir un arbre de transmission, qui permette de limiter les jeux mécaniques au sein de l'arbre de transmission et de réduire les oscillations de couples.

### Résumé de l'invention

A cet effet, l'invention propose un arbre de transmission pour une turbomachine d'aéronef, l'arbre de transmission présentant un axe longitudinal et comprenant :
- un corps cylindrique mâle s'étendant autour et le long de l'axe longitudinal,
- un premier tronçon cannelée agencé coaxialement autour du corps cylindrique mâle et présentant des première cannelures longitudinales régulièrement réparties autour de l'axe longitudinal et comprenant une alternance de première dents et de première gorges, le premier tronçon étant solidaire en rotation du corps cylindrique mâle.

L'arbre de transmission est remarquable en ce qu'il comprend en outre :
- un second tronçon cannelé agencé coaxialement autour du corps cylindrique mâle, le second tronçon présentant des seconde cannelures longitudinales régulièrement réparties autour de l'axe longitudinal et comprenant une alternance de seconde dents et de seconde gorges, le second tronçon étant sollicité par un élément élastique d'une première position à une seconde position dans laquelle les secondes dents sont décalées angulairement vis-à-vis des premières dents.

L'invention peut comprendre une ou plusieurs des caractéristiques suivantes, prises isolément les unes des autres ou en combinaison les unes avec les autres :
- l'élément élastique comprend au moins un premier ressort reliant mécaniquement les premier et second tronçons,
- l'élément élastique comprend un second ressort diamétralement opposé au premier ressort et reliant mécaniquement les premier et second tronçons,
- le premier tronçon comprend un flanc latéral annulaire présentant au moins un premier logement de réception du premier ressort et optionnellement un second logement de réception du second ressort,
- dans la seconde position, les secondes dents sont décalées angulairement de moins d'un demi-pas vis-à-vis des premières dents, un pas étant la distance inter-dents entre deux première dents adjacentes,
- au moins une butée axiale reliée au moyen élastique,
- un troisième tronçon agencé coaxialement autour du corps cylindrique mâle, le troisième tronçon présentant des troisième cannelures longitudinales réparties autour de l'axe longitudinal et comprenant une alternance de troisième dents et de troisième gorges, le premier tronçon étant agencé axialement entre les second et troisième tronçons, le troisième tronçon étant sollicité par un second élément élastique d'une première position à une seconde position dans laquelle les troisièmes dents sont décalées angulairement vis-à-vis des premières dents,
- dans la seconde position, les troisième dents sont alignées angulairement avec les seconde dents,
- un corps cylindrique femelle présentant un logement interne annulaire dans lequel est inséré le corps cylindrique mâle et des cannelures internes longitudinales coopérant avec les première et seconde cannelures, les cannelures internes comprenant une alternance de dents internes et de gorges internes, les première dents étant insérées dans les gorges internes et les seconde dents comblant un jeu angulaire définit entre les première dents et les dents internes,
- les secondes dents sont plaquées sur les dents internes.

L'invention concerne également un procédé de préparation d'un arbre de transmission selon l'une quelconque des caractéristiques précédentes.

Le procédé étant en outre remarquable en ce qu'il comprend les étapes suivantes :
(a) fournir le corps cylindrique mâle sur lequel est situé le premier tronçon,
(b) fournir le second tronçon, et
(c) solliciter le moyen élastique pour entrainer le second tronçon à partir de la première position jusqu'à la seconde position.

L'invention concerne également un procédé de montage d'un arbre de transmission selon l'une quelconque des caractéristiques précédentes.

Le procédé étant en outre remarquable en ce qu'il comprend les étapes suivantes :
(a') préparer l'arbre de transmission selon le procédé de préparation précédent,
(b') fournir le corps cylindrique femelle, et
(c') insérer le corps cylindrique mâle dans le corps cylindrique femelle, les seconde dents comblant le jeu défini entre les première dents et les dents internes.

### Brève description des figures

D'autres caractéristiques et avantages ressortiront de la description qui suit de modes de réalisation non limitatifs de l'invention en référence aux dessins annexés sur lesquels :
la figure 1 est une vue en coupe longitudinale d'un exemple d'une turbomachine d'aéronef selon l'invention;
la figure 2 est une vue schématique en coupe longitudinale d'un arbre de transmission selon l'invention, comprenant un corps cylindrique femelle et un corps cylindrique mâle engagé dans le corps cylindrique femelle,
la figure 3 est une vue en coupe transversale de l'arbre de transmission de

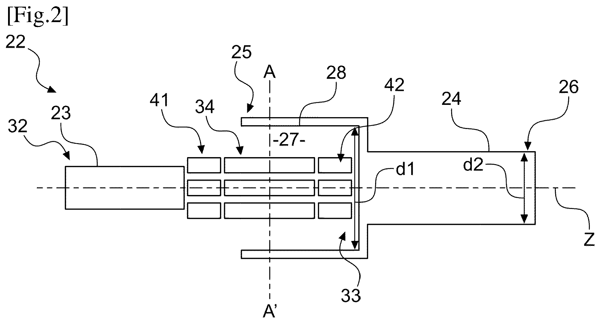

la figure 2, selon le plan A-A',

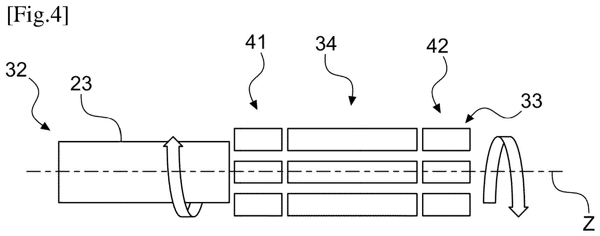

la figure 4 est une vue schématique en coupe longitudinale du corps cylindrique mâle de la figure 2 et indiquant le sens de montage des second et troisième tronçons cannelés,

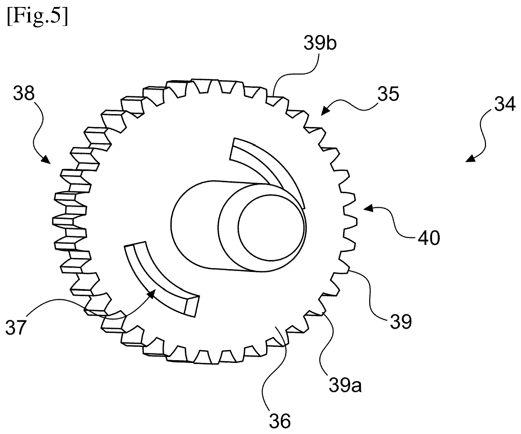

la figure 5 est une vue schématique en perspective du premier tronçon du corps cylindrique mâle,

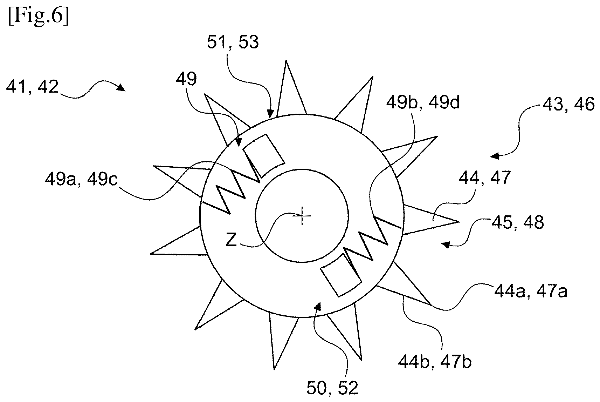

la figure 6 est une vue schématique en coupe transversale du second tronçon du corps cylindrique mâle,

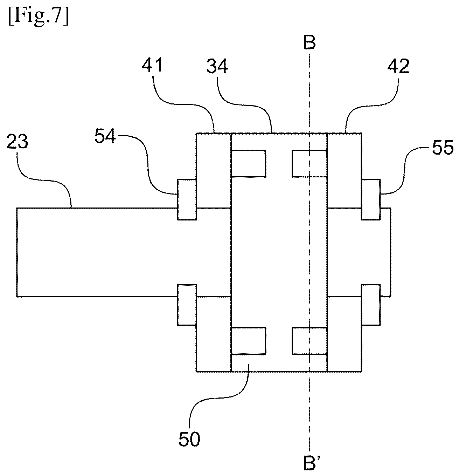

la figure 7 est une autre vue schématique en coupe longitudinale du corps cylindrique mâle,

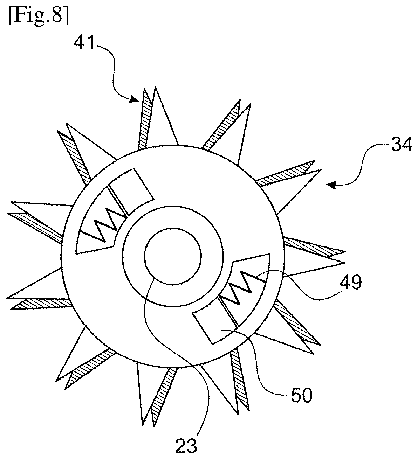

la figure 8 est une vue schématique en coupe transversale du corps cylindrique mâle selon le plan B-B',

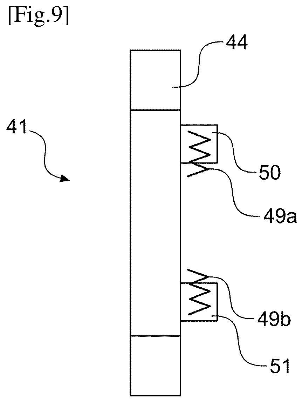

la figure 9 est une vue de côté du second tronçon de la figure 6.

### Description détaillée de l'invention

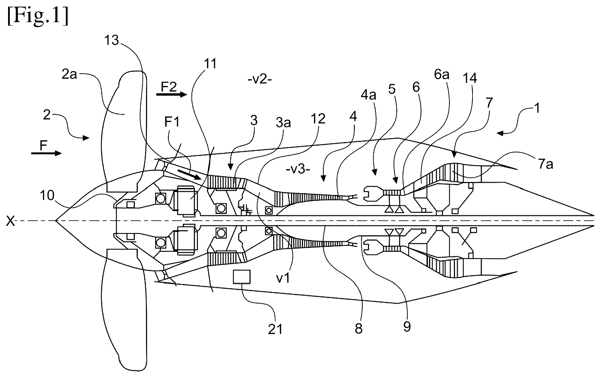

Un exemple de turbomachine 1 d'aéronef selon l'invention est représenté très brièvement sur la figure 1. La turbomachine 1 est par exemple un turbopropulseur.

La turbomachine 1 s'étend le long d'un axe longitudinal X. Un flux d'air F s'écoule dans la turbomachine 1.

Au sens de la présente invention, les termes « amont » et « aval » s'entendent relativement par rapport au sens d'écoulement du flux d'air F dans la turbomachine 1 le long de l'axe longitudinal X.

La turbomachine 1 comprend d'amont en aval, une soufflante 2, un compresseur basse pression 3, un compresseur haute pression 4, une chambre de combustion 5, une turbine haute pression 6 et une turbine basse pression 7.

Chaque compresseur 3,4 comprend un rotor de compresseur 3a, 4a et chaque turbine 6, 7 comprend un rotor de turbine 6a, 7a. Les rotors de compresseur 3a, 4a et de turbine 6a, 7a sont composés d'une pluralité d'étages comprenant chacun une roue aubagée.

Le rotor de compresseur 3a du compresseur basse pression 3 est relié au rotor de turbine 7a de la turbine basse pression 7 par un arbre basse pression 8. Ils forment un corps basse pression.

Le rotor de compresseur 4a du compresseur haute pression 4 est relié au rotor de turbine 6a de la turbine haute pression 6 par un arbre haute pression 9. Ils forment un corps haute pression.

Les arbres basse pression 8 et haute pression 9 sont centrés sur l'axe longitudinal X et mobiles en rotation autour de l'axe longitudinal X. L'arbre haute pression 9 est agencé coaxialement autour de l'arbre basse pression 8.

Le flux d'air F traverse la soufflante 2 et se divise en un flux d'air primaire F1 traversant une veine primaire v1 et en un flux d'air secondaire F2 traversant une veine secondaire v2 entourant la veine primaire. Le flux d'air primaire F1 traverse les compresseurs basse pression 3 et haute pression 4. Le flux d'air primaire F1 comprimé traverse ensuite la chambre de combustion 5 dans laquelle il est mélangé à un carburant. Les gaz issus de la combustion traversent ainsi les turbines haute pression 6 et basse pression 7. L'énergie des gaz est transformée par le rotor de turbine 7a de la turbine basse pression 7 en énergie mécanique permettant d'entrainer en rotation l'arbre basse pression 8 et par suite, le compresseur basse pression 3.

La soufflante 2 comprend un disque mobile en rotation autour de l'axe longitudinal X et des aubes 2a régulièrement réparties sur le disque. La soufflante 2 est par exemple de type non carénée. Par opposition à une soufflante 2 de type carénée, la soufflante 2 ne comprend pas de carter de soufflante entourant les aubes 2a. Selon un autre exemple non illustré, la soufflante 2 est de type carénée.

Le disque est entrainé en rotation par un arbre de soufflante 10. Avantageusement, l'arbre de soufflante 10 est relié à l'arbre basse pression 8, par exemple par l'intermédiaire d'un réducteur de vitesse 11. Le réducteur de vitesse 11 est de type mécanique. Il est par exemple à train épicycloïdal ou planétaire. De manière non illustrée, le réducteur de vitesse 11 comprend classiquement un solaire et une couronne centrés sur l'axe longitudinal X. Il comprend en outre des satellites engrenant avec le solaire et la couronne. Il comprend en outre un porte-satellites.

Le solaire est solidaire en rotation de l'arbre basse pression 8 et forme l'entrée du réducteur de vitesse 11, tandis que l'un ou l'autre de la couronne et du porte-satellites, selon la configuration du réducteur 11, est solidaire en rotation de l'arbre de soufflante 10 et forme la sortie du réducteur de vitesse 11.

Le réducteur de vitesse 11 permet l'entrainement de l'arbre de soufflante 10 à une vitesse de rotation inférieure à la vitesse de rotation de l'arbre basse pression 8. Ceci permet d'augmenter le taux de dilution de la turbomachine 1.

La turbomachine 1 comprend en outre un carter inter-compresseurs 12 agencé axialement, en référence à l'axe longitudinal X, entre le compresseur basse pression 3 et le compresseur haute pression 4.

La turbomachine 1 peut comprendre en outre un carter d'entrée 13. Le carter d'entrée 13 est agencé axialement ,en référence à l'axe longitudinal X, entre la soufflante 2 et le compresseur basse pression 3.

La turbomachine 1 peut comprendre en outre un carter inter-turbines 14. Le carter inter-turbines 14 est agencé axialement, en référence à l'axe longitudinal X, entre la turbine haute pression 6 et la turbine basse pression 7.

La turbomachine 1 peut comprendre en outre un compartiment inter-veines v3 situé entre la veine primaire v1 et la veine secondaire v2.

La turbomachine 1 comprend des accessoires ou équipements (non illustrés) tels qu'une pompe à carburant, une pompe de lubrification, un générateur électrique, une pompe électrique ou un démarreur.

Afin d'assurer l'entrainement de ces accessoires, la turbomachine 1 comprend typiquement une machine électrique. La machine électrique est de manière particulièrement avantageuse de type réversible. La machine électrique est ainsi configurée pour prélever une puissance d'un arbre, tel que l'arbre basse pression 8 ou haute pression 9 et pour injecter une puissance dans un arbre, tel que l'arbre basse pression 8 ou haute pression 9. La machine électrique peut être ainsi de type générateur lorsqu'elle est mise en œuvre dans une phase de prélèvement et de type moteur lorsqu'elle est mise en œuvre dans une phase d'injection de puissance.

Afin de réaliser les prélèvement ou injection de puissance, la turbomachine comprend typiquement un train d'entrainement des accessoires 21, également connu sous l'acronyme anglais ADT pour « Accessory Drive Train ». Le train d'entrainement des accessoires 21 comprend un train d'engrenages comprenant une série de roues dentées engrenant ensemble et montées chacune coaxialement autour d'un arbre d'entrainement respectif. L'entrainement des roues dentées du train d'engrenages est réalisé par prélèvement de puissance mécanique sur l'arbre basse pression ou haute pression 8, 9 par exemple. La puissance mécanique prélevée est transférée au train d'engrenages par l'intermédiaire d'arbres de transmission 22 couplé à l'un des arbres d'entrainement. Le train d'engrenages est par ailleurs couplé à des rotors des accessoires ou des équipements.

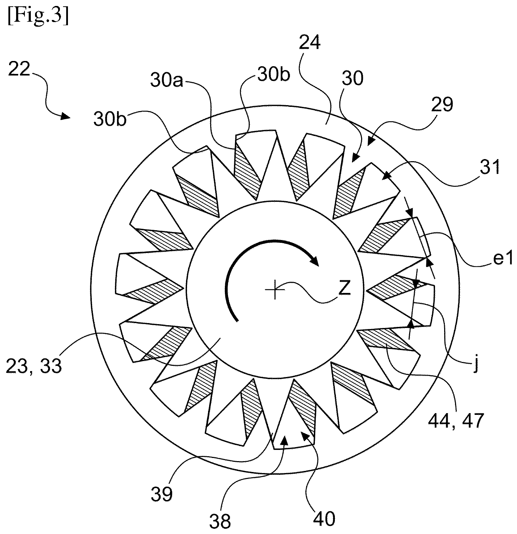

En référence aux figures 2 et 3, chaque arbre de transmission 22 présente un axe longitudinal Z.

Dans la suite de la description, les termes « longitudinal », « longitudinalement » s'étendent en référence à l'axe longitudinal Z de l'arbre de transmission 22.

L'arbre de transmission 22 comprend un corps cylindrique mâle 23 et un corps cylindrique femelle 24.

Chaque corps cylindrique mâle et femelle 23, 24 s'étend le long et autour de l'axe longitudinal Z. Chaque corps cylindrique mâle et femelle 23, 24 présente ainsi une forme allongée le long de l'axe longitudinal Z. Par « allongée », il est entendu que chaque corps cylindrique mâle et femelle 23, 24 présente une longueur telle que mesurée selon l'axe longitudinal Z supérieur à son diamètre interne.

Le corps cylindrique mâle 23 est monté coaxialement au moins en partie dans le corps cylindrique femelle 24. Le corps cylindrique mâle 23 coopère avec corps cylindrique femelle 24 par une liaison à cannelures.

Le corps cylindrique femelle 24 s'étend longitudinalement entre une première extrémité 25 et une seconde extrémité 26 opposée. Les première et seconde extrémités 25, 26 sont annulaires et centrées sur l'axe longitudinal Z. La première extrémité 25 présente un première diamètre interne d1 supérieur à un second diamètre interne ou externe d2 de la seconde extrémité 26..

Le corps cylindrique femelle 24 comprend un logement interne 27. Le logement interne 27 est annulaire et centré sur l'axe longitudinal Z. En particulier, le logement interne 27 est situé au niveau de la première extrémité 25. Ainsi, la première extrémité 25 est creuse.

Le logement interne 27 est délimité par une surface interne 28 annulaire cannelée.

En référence à la figure 3, la surface interne 28 présente ainsi des cannelures internes 29. Les cannelures interne 29 sont préférentiellement régulièrement réparties autour de l'axe longitudinal Z. Chaque cannelure interne 29 s'étend longitudinalement selon l'axe longitudinal Z. Chaque cannelure interne 29 présente ainsi une forme allongée le long d'une direction parallèle à l'axe longitudinal Z. Chaque cannelure interne 29 comprend une alternance de dents internes 30 et de gorges internes 31, autour de l'axe longitudinal Z. Chaque dent interne 30 présente un sommet 30a prolongé par deux flancs latéraux 30b.

Chaque dent interne 30 peut présenter un profil de forme générale triangulaire ou rectangulaire.

Chaque gorge interne 31 est délimité par circonférentiellement par deux dents internes 30 adjacentes. L'espace e1 délimité par deux dents internes définit la largeur d'une gorge interne 31.

Le corps cylindrique mâle 23 est mobile en rotation autour de l'axe longitudinal Z. Il s'étend longitudinalement entre une première extrémité 32 et une seconde extrémité 33 opposée. La première extrémité 32 peut comprend des cannelures longitudinales. La seconde extrémité 33 est insérée dans le logement interne 27 du corps cylindrique femelle 24. Ils coopèrent ensemble par la liaison à cannelures.

A cet effet, l'arbre de transmission 22 comprend en outre un premier tronçon 34 cannelé. Comme également visible sur la figure 4, le premier tronçon 34 est annulaire et centré sur l'axe longitudinal Z. Il est situé coaxialement autour du corps cylindrique mâle 23 et est solidaire en rotation de ce corps cylindrique mâle 23. En particulier, le premier tronçon 34 est situé au niveau de la seconde extrémité longitudinale 33 du corps cylindrique mâle 23. Le premier tronçon 34 peut présenter un diamètre égal ou supérieur au diamètre du corps cylindrique mâle 23.

De manière particulièrement préférée, le premier tronçon 34 et le corps cylindrique mâle 23 forment une seule pièce et sont ainsi venus de matière. En référence à la figure 5, le premier tronçon 34 comprend un bord périphérique 35 et des flancs latéraux 36. Le bord périphérique 35 est annulaire et centré sur l'axe longitudinal Z. Les flancs latéraux 36 sont également annulaires et centrés sur l'axe longitudinal Z et sont situés de part et d'autre du bord périphérique 35.

Au moins l'un des flancs latéraux 36 peut comprendre au moins un logement 37. Avantageusement, au moins l'un des flancs latéraux 36 peut comprendre deux logements 37 qui sont diamétralement opposés selon l'axe longitudinal Z. Chaque logement 37 présente une forme incurvée.

Le premier tronçon 34 comprend en outre des premières cannelures 38. Les premières cannelures 38 s'étendent longitudinalement selon l'axe longitudinal Z et le long du premier tronçon 34. Les premières cannelures 38 sont régulièrement réparties autour de l'axe longitudinal Z. Elles sont par exemple formées sur le bord périphérique 35.

Chaque première cannelure 38 comprend une alternance autour de l'axe longitudinal Z de première dents 39 et de première gorges 40.

Chaque première dent 39 présente un sommet 39a prolongé par deux flancs latéraux 39b.

Chaque première dent 39 peut présenter un profil de forme générale triangulaire ou rectangulaire.

Chaque première gorge 40 est délimité par circonférentiellement par deux première dents 39 adjacentes.

Comme visible sur la figure 3, les premières cannelures 38 du corps cylindrique mâle 23 coopèrent avec les cannelures internes 39 du corps cylindrique femelle 24. En particulier, les premières dents 39 sont insérées dans les gorges internes 31 des cannelures internes 29.

Une telle coopération par cannelures permet de transmettre le mouvement de rotation du corps cylindrique mâle 23 au corps cylindrique femelle 24. Toutefois, la largeur des première dents 39 est inférieur à la largeur e1 des gorges internes 31. Il existe ainsi un jeu j angulaire délimité entre une première dent 39 et une dent interne 30 adjacente. Ce jeu angulaire est responsable de cliquetis, de surcouples dynamiques et de dynamiques de torsion qui sont exacerbés par l'alternance de phases d'injection et de prélèvement de puissance lors desquelles les arbres de transmission 22 sont mis en œuvre.

A cet effet, l'arbre de transmission 22 selon l'invention comprend en outre un second tronçon 41 cannelé et avantageusement un troisième tronçon 42 cannelé.

Comme visible sur la figure 4 par exemple, les second et troisième tronçons 41, 42 sont situés coaxialement autour du corps cylindrique mâle 23 et de part et d'autre du premier tronçon 34.

En référence à la figure 6, le second tronçon 41 est annulaire et centré sur l'axe longitudinal Z. Il comprend des secondes cannelures 43. Les secondes cannelures 43 s'étendent longitudinalement selon l'axe longitudinal Z et le long du second tronçon 41. Les secondes cannelures 43 sont régulièrement réparties autour de l'axe longitudinal Z.

Chaque seconde cannelure 43 comprend une alternance autour de l'axe longitudinal Z de seconde dents 44 et de seconde gorges 45.

Chaque seconde dent 44 présente un sommet 44a prolongé par deux flancs latéraux 44b.

Chaque seconde dent 44 peut présenter un profil de forme générale triangulaire ou rectangulaire. De manière préférée, le profil de chaque seconde dent 44 est identique au profil des première dents 39. Le nombre de seconde dents 44 est identique au nombre de première dents 39. Chaque seconde gorge 45 est délimité circonférentiellement par deux seconde dents 44 adjacentes.

Le troisième tronçon 42 est annulaire et centré sur l'axe longitudinal Z. Il comprend des troisième cannelures 46. Les troisième cannelures 46 s'étendent longitudinalement selon l'axe longitudinal Z et le long du troisième tronçon 42. Les troisième cannelures 46 sont régulièrement réparties autour de l'axe longitudinal Z.

Chaque troisième cannelure 46 comprend une alternance autour de l'axe longitudinal Z de troisième dents 47 et de troisième gorges 48.

Chaque troisième dent 47 présente un sommet 47a prolongé par deux flancs latéraux 47b.

Chaque troisième dent 47 peut présenter un profil de forme générale triangulaire ou rectangulaire. De manière préférée, le profil de chaque troisième dent 47 est identique au profil des première dents 39 et des secondes dents 43. Le nombre de troisième dents 47 est identique au nombre de première dents 39.

Chaque troisième gorge 48 est délimité circonférentiellement par deux troisième dents 47 adjacentes.

Les second et troisième tronçons 41, 42 sont mobiles en rotation autour de l'axe longitudinal X. Les second et troisième tronçons 41, 42 sont mobiles entre une première position et une seconde position dans laquelle les seconde et troisième dents 44, 47 sont décalées angulairement vis-à-vis des première dents 39. Par « décalées angulairement », il est entendu que les dents présentent une position circonférentielle qui est différente. Préférentiellement, les seconde et troisième dents 44, 47 sont décalées angulairement de moins d'un demi-pas vis-à-vis des première dents 39, un pas étant la distance e1 inter-dents entre deux première dents adjacentes 39.

Pour assurer le déplacement des second et troisième tronçons 41, 42 en rotation autour de l'axe longitudinal X, l'arbre de transmission 22 comprend en outre un moyen élastique 49 apte à solliciter les second et troisième tronçons 41, 42 en rotation de la première à la seconde position.

Le moyen élastique 49 comprend par exemple un premier ressort 49a et avantageusement un second ressort 49b apte à solliciter le second tronçon 41. Le moyen élastique 49 peut comprendre des troisième et quatrième ressort 49c, 49d aptes à solliciter le troisième tronçon 42. Les premier et second ressorts 49a, 49b sont disposés dans les logements 37 d'un premier flanc latéral 36 du premier tronçon 34. Ils sont diamétralement opposés. Ils relient mécaniquement le premier tronçon 34 au second tronçon 41. Les troisième et quatrième ressort 49c, 49d sont disposés dans les logements 37 d'un second flanc latéral 36 du premier tronçon 34. Ils sont diamétralement opposés. Ils relient mécaniquement le premier tronçon 34 au troisième tronçon 42.

L'arbre de transmission 22 comprend de manière avantageuse au moins une butée axiale 50 reliée au premier ressort 49a. Avantageusement, l'arbre de transmission 22 comprend une seconde butée 51 axiale reliée au second ressort 49b. Les première et seconde butées axiales 50, 51étant diamétralement opposées et situées dans le logement 37.

L'arbre de transmission 22 comprend de manière avantageuse au moins une troisième butée axiale 52 reliée au troisième ressort 49c une quatrième butée axiale 53 reliée au quatrième ressort 49d. Les troisième et quatrième butées axiales 52, 53 étant diamétralement opposées et situées dans le logement 37.

En référence à la figure 7, l'arbre de transmission 22 peut comprendre en outre des arrêts axiaux 54, 55 annulaires montés autour du corps cylindrique male 23, les second et troisième tronçons 41, 42 étant situés axialement entre le premier tronçon 34 et les arrêts axiaux 54, 55 afin de maintenir en position axiale les second et troisième tronçons.

En référence à la figure 3, en position de montage du corps cylindrique male 23 dans le corps cylindrique femelle 24, les seconde dents 44 et avantageusement les troisième dents 47 comblent le jeu j défini entre les première dents 39 et les dents internes 30. Avantageusement, les seconde dents 44 et avantageusement les troisième dents 47 sont plaquées sur les dents internes 30.

Grâce au second tronçon 41 et au moyen élastiquement déformable 49, le jeu j entre les cannelures mâles et femelles est comblé, réduisant ainsi les cliquetis et les oscillations de couples.

L'arbre de transmission 22 est ainsi plus mécaniquement robuste, notamment pour subir une alternance de phases d'injection et de prélèvement de puissance.

Un procédé de préparation de l'arbre de transmission 22 va maintenant être décrit.

Ce procédé de préparation comprend les étapes suivantes :
(a) fournir le corps cylindrique male 23 avec le premier tronçon 34,
(b) monter les second et optionnellement troisième tronçon 41, 42 autour du corps cylindrique male 23, de part et d'autre du premier tronçon 34,
(c) solliciter le moyen élastique pour entrainer les second et optionnellement troisième tronçon 41, 42 de la première position à la seconde position. Avantageusement, les second et troisième tronçons 41, 42 sont entrainés en rotation autour de l'axe longitudinal Z dans des sens opposés. Ceci permet d'anticiper les inversions de couples dans les deux sens de rotation.

Un procédé de montage de l'arbre de transmission 22 va maintenant être décrit.

Ce procédé de montage comprend les étapes suivantes :
(a') préparer l'arbre de transmission selon les étapes (a) à (c),
(b') monter le corps cylindrique mâle 23 dans le corps cylindrique femelle 24. Lors de l'étape (b'), les seconde dents 44 et avantageusement les troisième dents 47 comblent le jeu j défini entre les première dents 39 et les dents internes 30.

## Revendications

1. Arbre de transmission (22) pour une turbomachine (1) d'aéronef, l'arbre de transmission (22) présentant un axe longitudinal (Z) et comprenant :
- un corps cylindrique mâle (23) s'étendant autour et le long de l'axe longitudinal (Z),
- un premier tronçon (34) cannelée agencé coaxialement autour du corps cylindrique mâle (23) et présentant des première cannelures (38) longitudinales régulièrement réparties autour de l'axe longitudinal (Z) et comprenant une alternance de première dents (39) et de première gorges (40), le premier tronçon (34) étant solidaire en rotation du corps cylindrique mâle (23),
**caractérisé en ce que** l'arbre de transmission (22) comprend en outre :
- un second tronçon (41) cannelé agencé coaxialement autour du corps cylindrique mâle (23), le second tronçon (41) présentant des seconde cannelures (43) longitudinales régulièrement réparties autour de l'axe longitudinal (Z) et comprenant une alternance de seconde dents (44) et de seconde gorges (45), le second tronçon (41) étant sollicité par un élément élastique (49) d'une première position à une seconde position dans laquelle les secondes dents (44) sont décalées angulairement vis-à-vis des premières dents (39).

2. Arbre selon la revendication précédente, **caractérisé en ce que** l'élément élastique (49) comprend au moins un premier ressort (49a) reliant mécaniquement les premier et second tronçons (34, 41).

3. Arbre selon la revendication précédente, **caractérisé en ce que** l'élément élastique (49) comprend un second ressort (49b) diamétralement opposé au premier ressort (49a) et reliant mécaniquement les premier et second tronçons (34, 41).

4. Arbre selon l'une des revendications 2 ou 3, **caractérisé en ce que** le premier tronçon (34) comprend un flanc latéral (36) annulaire présentant au moins un premier logement (37) de réception du premier ressort (49a) et optionnellement un second logement (37) de réception du second ressort (49b).

5. Arbre selon l'une quelconque des revendications précédentes, **caractérisé en ce que** dans la seconde position, les secondes dents (44) sont décalées angulairement de moins d'un demi-pas vis-à-vis des premières dents (39), un pas étant la distance inter-dents entre deux première dents adjacentes (39).

6. Arbre selon l'une quelconque des revendications précédentes, **caractérisé en ce qu'**il comprend au moins une butée axiale (50) reliée au moyen élastique (49).

7. Arbre selon l'une quelconque des revendications précédentes, **caractérisé en ce qu'**il comprend un troisième tronçon (42) agencé coaxialement autour du corps cylindrique mâle (23), le troisième tronçon (42) présentant des troisième cannelures (46) longitudinales réparties autour de l'axe longitudinal (Z) et comprenant une alternance de troisième dents (47) et de troisième gorges (48), le premier tronçon (34) étant agencé axialement entre les second et troisième tronçons (41, 42), le troisième tronçon (42) étant sollicité par un second élément élastique (49b) d'une première position à une seconde position dans laquelle les troisièmes dents (47) sont décalées angulairement vis-à-vis des premières dents (39).

8. Arbre selon la revendication précédente, **caractérisé en ce que** dans la seconde position, les troisième dents (47) sont alignées angulairement avec les seconde dents (44).

9. Arbre selon l'une quelconque des revendications précédentes, **caractérisé en ce qu'**il comprend un corps cylindrique femelle (24) présentant un logement interne (27) annulaire dans lequel est inséré le corps cylindrique mâle (23) et des cannelures internes (29) longitudinales coopérant avec les première et seconde cannelures (39, 44), les cannelures internes (29) comprenant une alternance de dents internes (30) et de gorges internes (31), les première dents (39) étant insérées dans les gorges internes (30) et les seconde dents (44) comblant un jeu (j) angulaire définit entre les première dents (39) et les dents internes (30).

10. Arbre selon la revendication précédente, **caractérisé en ce que** les secondes dents (44) sont plaquées sur les dents internes (30).

11. Procédé de préparation d'un arbre de transmission (22) selon l'une quelconque des revendications précédentes, **caractérisé en ce qu'**il comprend les étapes suivantes :
(a) fournir le corps cylindrique mâle (23) sur lequel est situé le premier tronçon (34),
(b) fournir le second tronçon (41), et
(c) solliciter le moyen élastique pour entrainer le second tronçon (41) à partir de la première position jusqu'à la seconde position.

12. Procédé de montage d'un arbre de transmission (22) selon l'une quelconque des revendications 1 à 8 en combinaison avec la revendication 9 , **caractérisé en ce qu'**il comprend les étapes suivantes :
(a') préparer l'arbre de transmission (22) selon le procédé de préparation de la revendication 11,
(b') fournir le corps cylindrique femelle (24), et
(c') insérer le corps cylindrique mâle (23) dans le corps cylindrique femelle (24), les seconde dents (44) comblant le jeu (j) défini entre les première dents (39) et les dents internes (30).
